# FASCICULE DE BREVET EUROPEEN

(11) **EP 1 414 890 B1**
(45) Date de publication et mention de la délivrance du brevet: **30.08.2006**
(21) Numéro de dépôt: 02784861.3
(22) Date de dépôt: 10.07.2002
(51) Int. Cl.: C08J 7/12, B29C 73/00, B64C 1/14, C08L 33/12

(54) **PLAQUE TRANSPARENTE A BASE DE POLYMERE DE METHACRYLATE DE METHYLE, MODIFIEE EN SURFACE**
OBERFLÄCHENMODIFIZIERTE, DURCHSICHTIGE POLYMETHYLMETHACRYLATPLATTE
SURFACE-MODIFIED METHYL METHACRYLATE POLYMER BASED TRANSPARENT SHEET MATERIAL

(30) Priorité: 13.07.2001 FR 0109732
(43) Date de publication de la demande: 06.05.2004
(73) Titulaire: SAINT-GOBAIN GLASS FRANCE, 92400 Courbevoie (FR)
(72) Inventeur: JORET, Laurent, F-75015 Paris (FR); CHAUSSADE, Pierre, F-45100 Orléans (FR); NAOUMENKO, Yves, F-45640 Bray en Val (FR)
(74) Mandataire: Colombier, Christian
(86) Numéro de dépôt international: PCT/FR2002/002415
(87) Numéro de publication internationale: WO 2003/006538

(56) Documents cités:
- DE-U- 29 502 546
- DATABASE WPI Week 8638 Derwent Publications Ltd., London, GB; AN 1986-247683 XP002193683 & JP 61 162008 A (FUJITSU LTD), 22 juillet 1986 (1986-07-22) cité dans la demande

## Description

La présente invention concerne l'amélioration des propriétés, en particulier de la résistance au microfendillement ou ("crazing"), des matériaux acryliques transparents en plaques monolithiques ou feuilletées à base d'homopolymère ou copolymère de méthacrylate de méthyle, en particulier de l'homopolymère poly(méthacrylate de méthyle) (PMMA). Elle porte également sur ces matériaux à propriétés améliorées, sur les vitrages, en particulier les vitrages de véhicules aériens à base de ces matériaux, et sur un procédé de traitement d'un matériau traditionnel de ce type afin d'en améliorer les propriétés, et, d'une manière générale, sur un procédé permettant d'améliorer les propriétés de ces matériaux.

Dans la description qui va suivre, nous nous référerons le plus souvent aux dalles externes des hublots d'avions, lesquelles représentent l'application préférée de la présente invention, mais il va de soi que celle-ci n'est pas limitée aux vitrages pour véhicules aériens (hublot, pare-brise, bulle d'hélicoptère, latérale de cokpit) et qu'elle englobe toutes les autres applications possibles de ces matériaux en plaque à base de PMMA ou similaires : vitrages de tous types, verrières, etc.

Les hublots sont à l'heure actuelle fabriqués en PMMA étiré. L'étirage renforce le matériau PMMA, en particulier contre la propagation d'entaille et la résistance au microfendillement. L'utilisation de ce matériau est justifiée par un bon rapport résistance mécanique/poids et une relative facilité de mise en oeuvre : plaques monolithiques usinées en périphérie, montage en double vitrage dans un joint silicone.

En revanche, la résistance de surface de ce matériau acrylique étiré reste relativement faible : abrasion, rayures, microfendillement et apparition de fissures dégradent les qualités optiques du hublot, en peau extérieure, et sous certains éclairages empêchent la vision. A ce stade, les hublots doivent être déposés - opération coûteuse - pour être soit réparés par usinage, soit changés. La situation actuelle a deux conséquences pour les compagnies aériennes : inconfort du passager et image de marque négative quand le hublot est très dégradé ; surcoût en réparation et/ou échange.

Depuis 1980, il y a eu plusieurs "crises de crazing" affectant la plupart des grandes compagnies aériennes et conduisant aux changements des hublots après 2000 heures de vol contre 10 000 à 15 000 heures de vol en temps normal. Des hypothèses ont été avancées pour expliquer ces crises :

L'origine principale du microfendillement (phénomène important avec les aéronefs pressurisés) est due à un phénomène d'absorption/désorption d'eau en surface extérieure du hublot, ce phénomène étant amplifié par les cycles :
- pression atmosphérique + humidité élevée au sol : absorption d'eau ;
- basse pression + faible humidité à 10 000 m : désorption d'eau.

Ce phénomène d'entrée-sortie de l'eau a en soi peu d'effet sur la vie du hublot, car il conduit à un équilibre de la concentration en eau. Cependant, l'eau présente une affinité pour le polymère constitutif du hublot (jouant un rôle de "plastifiant"), et va se "solubiliser" au sein du polymère, puis diffuser. Or, lors de cette diffusion et de ce phénomène d'absorption-désorption, l'eau entraîne avec elle de l'acide sulfurique, oxydant puissant, dont la concentration dans l'air se trouve très fortement accrue en cas d'éruptions volcaniques, lesquelles ne sont pas si rares. La désorption d'eau peut alors être accélérée par l'acide sulfurique qui agit comme un dessicant et conduit à des contraintes fortes allant jusqu'au microfendillement. La surface du hublot est également soumise à des contraintes de montage. Subissant donc des déformations et des variations de volume et ainsi sollicitée en présence de dérivés soufrés, la surface du hublot subit ce microfendillement inévitablement.

Pour supprimer ce désavantage que présente le matériau PMMA étiré de conduire ainsi au microfendillement, deux types de solutions ont été proposés jusqu'ici :
(1) le choix d'une matière première acrylique de très bonne qualité, fortement réticulée, donc à faible absorption d'eau, associée à une très bonne qualité de surface obtenue par polissage après usinage diamant sans contrainte ;
(2) des vernis de protection qui résistent à l'abrasion et qui suppriment tous risques de microfendillement, car ne présentant pas ou présentant peu d'échange avec l'eau, ces vernis pouvant être souples (polyuréthane) ou durs (polysiloxanes) ; ou encore des films de protection qui forment également une barrière physique rapportée sur le hublot.

La solution (1) n'est pas satisfaisante globalement.

Dans le cas de fortes pollutions en acide sulfurique, la solution (2) n'est pas non plus satisfaisante en raison de la présence d'une "épaisseur", la qualité optique de surface étant inférieure à celle d'un hublot nu. De plus, la dépose du vernis utilise les techniques de ruissellement ("flow coating") ou de pulvérisation, opérations rendues complexes par la nécessité de protéger aussi le bord du hublot au niveau du lamage. Par ailleurs, le vernissage doit se faire impérativement en salle blanche (classe 1000) car une poussière présente en surface au moment de l'application va générer un défaut optique majeur (piquet de tente, filasse..) particulièrement visible par effet de loupe. Les vernis ne sont ni réparables, ni régénérables, rendant nécessaire d'usiner à nouveau la surface lorsqu'elle est dégradée.

Ainsi, l'application d'un film ou d'un vernis entraîne un surcoût que l'on souhaite éviter.

Pour résoudre ce problème de microfendillement, la Société déposante a recherché un traitement capable de conserver une qualité optique de surface identique à celle d'un hublot nu, d'être effectué à faible coût, et de pouvoir être renouvelé également à faible coût, autrement dit permettant de reprendre les pièces sans faire appel à des opérations manuelles et unitaires, ce qui est le cas avec l'emploi de films ou vernis.

La Société déposante a alors découvert qu'en modifiant le matériau lui-même pour le rendre plus dense au moins à sa surface, on parvenait à résoudre le problème posé en évitant les inconvénients des pellicules et vernis rapportés, ainsi que les perturbations optiques aux interfaces.

La présente invention a donc d'abord pour objet l'utilisation, pour l'amélioration de la résistance au microfendillement de la surface d'une plaque ou vitrage soumise à des cycles d'absorption/désorption d'eau sur ladite surface, d'un matériau en plaque transparente monolithique ou feuilletée à base d'un homo- ou d'un copolymère de méthacrylate de méthyle, le matériau feuilleté ayant au moins l'une de ses deux couches externes faites de l'homo- ou du copolymère de méthacrylate de méthyle, ledit matériau en plaque monolithique d'homo- ou copolymère de méthacrylate de méthyle ou au moins une couche externe d'homo- ou copolymère de méthacrylate de méthyle d'un matériau en plaque feuilletée présentant, dans la région de la surface, sur une profondeur d'au moins 50 nanomètres à partir de la surface, un accroissement de sa masse volumique moyenne de 0,1 à 1 g/cm³, en particulier de 0,1 à 0,4 g/cm³, la masse volumique moyenne étant déterminée par réflectométrie des rayons X.

De préférence, le matériau est à base de PMMA. Il n'est cependant pas exclu qu'il soit fait en un copolymère de méthacrylate de méthyle.

On entend par copolymère de méthacrylate de méthyle un copolymère obtenu à partir d'une composition de monomères comprenant au moins 50% en moles de méthacrylate de méthyle, les monomères restants étant choisis parmi tous les monomères copolymérisables, susceptibles de conduire à des plaques ayant les propriétés mécaniques et optiques requises.

Comme exemples de comonomères polymérisables, on peut citer l'acide méthacrylique, l'acrytate de méthyle, l'acrylate de méthyle-Na, le méthacrylate d'hydroxyéthyle, la vinylpyrrolidone, les (méth)acrylates siloxaniques tels que ceux de formules : 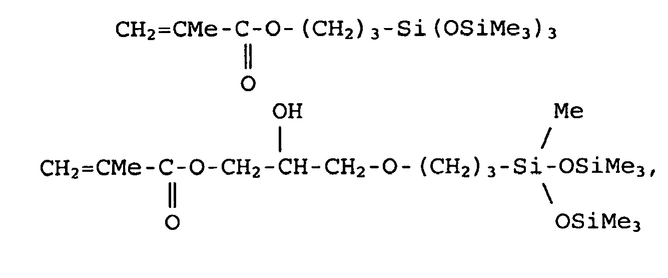 et
les (méth)acrytates fluorés, tels que ceux des formules : 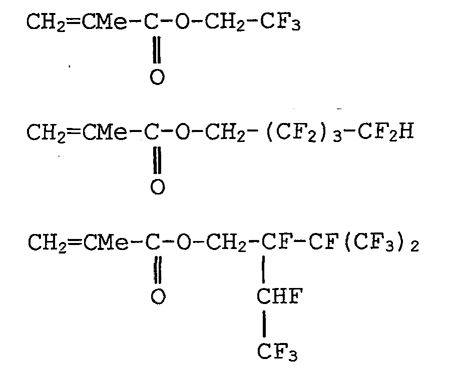 (Me = méthyle) ;
on peut également citer les monomères de réticulation qui peuvent être présents en faibles quantités, tels que le diméthacrylate de triéthylène glycol(TEDMA) et le diméthacrylate d'éthylène glycol (EGDMA).

Les matériaux en plaques feuilletées sont ceux constitués par un empilement de plusieurs feuilles ou plaques, tels que ceux dans lesquels une feuille de polyvinylbutyral ou de polyuréthanne (d'une épaisseur généralement comprise entre 0,3 et 2 mm) est prise en sandwich entre deux feuilles de PMMA.

Par ailleurs, les plaques qui font l'objet de la présente invention, aussi bien monolithiques que feuilletées, peuvent être planes ou bombées ou cintrées.

On soulignera également que la masse volumique du PMMA de départ est proche de 1,1 g/cm³. On se trouve donc en présence d'un accroissement significatif de la masse volumique de la surface du PMMA.

Conformément à un mode de réalisation particulier de la présente invention, le matériau a été soumis à un traitement apte à le densifier en surface sur une profondeur allant jusqu'à 5 microns, en particulier allant de 0,5 à 1,5 microns.

Comme indiqué ci-dessus, l'accroissement de densité est mesuré par réflectométrie des rayons X ; cette mesure s'effectue au mieux sur une profondeur d'au plus 1 micron, plus particulièrement d'au plus 500 nanomètres. Ceci ne signifie pas pour autant que la densification de la surface soit limitée à une telle profondeur.

Le traitement de densification de la surface est notamment un traitement de fluoration ou d'oxyfluoration qui a conduit à la formation d'un gradient de concentration en atomes de fluor de la surface vers l'intérieur du matériau.

En particulier, la concentration en atomes de fluor, déterminée par SEM-EDS (Scanning Electron Microscopy Et Energy Dispersive System), est d'au moins 0,25 atome de fluor, généralement de 0,25 à 8 atomes de fluor, notamment de 0,25 à 5 atomes de fluor, en particulier de 0,33 à 1,5 atome de fluor par motif répétitif : 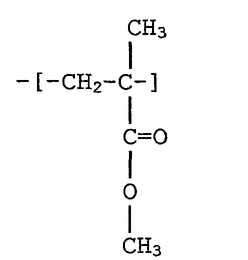 à l'extrême surface du matériau (on entend par extrême surface une profondeur de quelques nanomètres à partir de la surface).

Un tel traitement de fluoration ou d'oxyfluoration conduit donc à la substitution par le fluor de certains hydrogènes unités monomères du polymère constitutif de la plaque. Par XPS (X-Wave Photospectroscopy), les groupements résultant du traitement de fluoration (ou d'oxyfluoration), à savoir -CF-, -CF₂- et -CF₃ sont clairement identifiés respectivement à 287,9 eV, 290,8 eV et 293,7 eV.

En plus d'introduire du fluor, le traitement permet de créer des radicaux et de former des liaisons covalentes entre les chaînes de polymère. La densification du matériau résulte de cet effet de "réticulation".

Sans vouloir être lié par une quelconque théorie, on pense que l'introduction de fluor - pour lequel l'eau a peu d'affinité - diminue la "solubilisation" de l'eau dans la plaque, et que la diffusion de l'eau est empêchée dans la mesure où le compactage de la surface a resserré le maillage à travers lequel l'eau a la possibilité de diffuser. Les phases d'absorption-désorption décrites ci-dessus sont donc réduites en intensité. Corrélativement, H₂SO₄ n'ayant plus son vecteur pour pénétrer dans la plaque ne peut entraîner le microfendillement tel qu'il a été décrit ci-dessus.

Par ailleurs, le traitement de fluoration ou d'oxyfluoration de surface conduit à un véritable gradient de concentration du fluor dans l'épaisseur de la plaque. Les propriétés optiques de cette dernière ne sont pas affectées comme cela serait le cas d'un film ou vernis externe qui forme une limite brusque et nette dans l'épaisseur de la plaque, ce qui serait également le cas d'un matériau coextrudé avec une couche externe de plus grande densité.

Selon un procédé de fabrication d'un matériau en plaque convenant à la présente utilisation tel que défini ci-dessus, modifié en surface, on soumet une ou des plaques à base d'homo- ou copolymère de méthacrylate de méthyle à un traitement de fluoration ou d'oxyfluoration de surface par un mélange gazeux F₂ ou NF₃ ou ClF₃ (de préférence F₂) + gaz vecteur tel que l'hélium, N₂ et CO₂, le cas échéant en présence d'oxygène résiduel de l'air, dans une chambre de réaction, jusqu'à obtention de L'accroissement de ta masse volumique désiré.

Ces traitements sont connus en soi et décrits notamment dans les demandes de brevets européens EP-A-502 303 et EP-A-629 654 auxquels on se reportera pour plus de détails.

Le document DE-U-29 502 546 décrit la fluoration des vitres d'hublot pour résoudre le problème technique de la fissuration à partir de leur bord ("edge-cracking").

Conformément à un premier mode de réalisation possible, on effectue un cycle de fluoration/perfluoration de la façon suivante :
- on met sous vide le réacteur dans lequel sont disposées les pièces à traiter ;
- on isole le réacteur du circuit de pompage et on y introduit un mélange N₂/F₂ jusqu'à ce que la pression atteigne 250 à 300 mbar ;
- on laisse Les pièces au contact du mélange pendant un laps de temps de 10 à 60 minutes en fonction de ta profondeur de traitement de surface recherchée ;
- à l'issue du traitement, on conduit une première purge pour éliminer la quasi-totalité du fluor n'ayant pas réagi, puis des purges supplémentaires avec introduction d'air avant ouverture du réacteur.

Conformément à un second mode de réalisation possible, on effectue un cycle d'oxyfluoration de ta façon suivante :
- on abaisse jusqu'à environ 200 mbar ta pression d'air dans le réacteur dans lequel sont disposées les pièces à traiter ;
- on isole le réacteur du circuit de pompage et on y introduit un mélange N₂/F₂ jusqu'à ce que ta pression atteigne 350 à 400 mbar ;
- on laisse les pièces au contact du mélange pendant un laps de temps de 10 secondes à 3 minutes en fonction de ta profondeur de traitement de surface recherchée;
- à l'issue du traitement, on conduit une première purge pour éliminer la quasi-totalité du fluor n'ayant pas réagi, puis des purges supplémentaires avec introduction d'air avant ouverture du réacteur.

Les propriétés mécaniques, la résistance à l'abrasion (dureté Taber), la tenue au vieillissement, la tenue au vieillissement en température (essai de conservation pendant 90 jours à 80°C), la tenue de vieillissement aux UV, l'hydrophilie, l'hydrophobicité (angle de mouillage) ne sont pas modifiées par le traitement de surface de fluoration ou d'oxyfluoration.

La couleur des plaques n'est pas non plus modifiée (a* = 0,03, b* = 0,12 dans le cas de PMMA). Dans tous les cas, le flou reste très inférieur à 2%.

La transmission lumineuse peut être accrue d'au moins 4% en raison d'un effet anti-reflet résultant du traitement. L'indice optique du PMMA non traité est compris entre 1,47 et 1,51. Après traitement, cet indice est modifié en surface et dépend de la concentration locale en atomes de fluor incorporés. Si l'on considère une concentration moyenne en fluor à ta surface du PMMA (hypothèse d'une monocouche optique), un indice de 1,39 à 1,42 est déterminé.

Le traitement de fluoration ou d'oxyfluoration apporte l'avantage complémentaire d'apporter du fluor qui améliore la résistance au collage du matériau, ce qui s'avère utile pour le maintien des plaques dans les joints périphériques des vitrages.

La présente invention porte également sur l'utilisation du matériau précédemment décrit dans des vitrages aptes à résister au microfendillement par densification de la surface destinée à être exposée à l'atmosphère extérieure, notamment des vitrages de véhicules aériens. (En pratique, le procédé ci-dessus conduira à la fluoration des surfaces à la fois interne et externe. Le fait que la surface interne soit également fluorée n'apporte aucune gêne).

Des fonctionnalités hydrophobes ou antisolaires par couche Ag/Au ou film de polyéthylènetéréphtalate (PET) peuvent être apportées à ces vitrages de façon classique.

La présente invention porte aussi sur un procédé de fabrication d'un vitrage tel que défini ci-dessus, notamment d'une dalle externe de hublot d'avion, caractérisé par le fait que l'on découpe une plaque de base d'homo- ou copolymère de méthacrylate de méthyle en plusieurs plaques unitaires destinées à former les vitrages, et que l'on soumet chaque plaque unitaire à un étirage, un traitement de fluoration ou d'oxyfluoration tel que défini ci-dessus étant conduit avant découpe ou avant étirage ou après étirage.

La présente invention porte également sur l'utilisation d'un matériau tel que précédemment décrit dans un procédé de restauration d'un vitrage pour véhicule aérien présentant à sa surface des microfendillements, caractérisé par le fait que l'on enlève la couche externe de la plaque constituant le vitrage à restaurer par traitement mécanique de polissage sur une profondeur de 0,3 - 0,7 mm, puis on soumet ladite plaque au traitement de fluoration ou d'oxyfluoration tel que défini ci-dessus.

Enfin ta présente invention porte sur un procédé permettant de rendre résistant au microfendittement et/ou d'améliorer la résistance au collage d'un matériau en plaque monolithique à base d'un polymère de méthacrylate de méthyle, caractérisé par le fait que l'on choisit le polymère de méthacrylate de méthyle parmi les copolymères de méthacrylate de méthyle-comonomère(s) fluoré(s), les polymères de méthacrylate de méthyle traités par immersion dans une solution d'acide fluorhydrique anhydre ou d'un sel choisi parmi NaF, KF, LiF et CaF₂, suivie d'une réaction de fluoration électrolytique (cf. JP-61-162 008), et les polymères de méthacrylate de méthyle traités en surface par le procédé de fluoration ou d'oxyfluoration tel que décrit ci-dessus.

Les comonomères fluorés sont par exemple ceux indiqués ci-dessus, leur taux dans le copolymère étant réglé pour obtenir l'augmentation de masse volumique voulue ou l'amélioration recherchée de ta résistance au collage. Dans ce cas, le fluor est détectable dans toute l'épaisseur du matériau et non plus seulement en surface.

Les Exemples suivants illustrent la présente invention sans toutefois en limiter la portée.

### Exempte 1 : Fabrication d'une dalle externe de hublot résistante au microfendillement

Un hublot comporte de façon traditionnelle deux dalles de PMMA étiré qui sont disposées en regard et à distance l'une de l'autre et qui sont maintenues par un joint d'étanchéité périphérique en élastomère par lequel le hublot est destiné à venir s'encastrer dans le fuselage métallique de l'avion. La dalle externe a la forme d'une plaque relativement épaisse dont la bordure périphérique est biseautée. La dalle interne consiste en une plaque moins épaisse que la dalle externe. Les deux dalles sont bombées, de concavité tournée vers l'intérieur.

Dans une plaque de PMMA, on a découpé des dalles externes de 44 cm x 27 cm de longueur et de 3 cm d'épaisseur et on les a soumises au traitement d'étirage classique.

On a effectué l'oxyfluoration de surface de ces dalles avec un mélange N₂/F₂ à 5% ou à 25% de F₂, avec des temps de traitement variables (2, 5, 10, 15, 20 minutes) et dans les conditions précédemment définies.

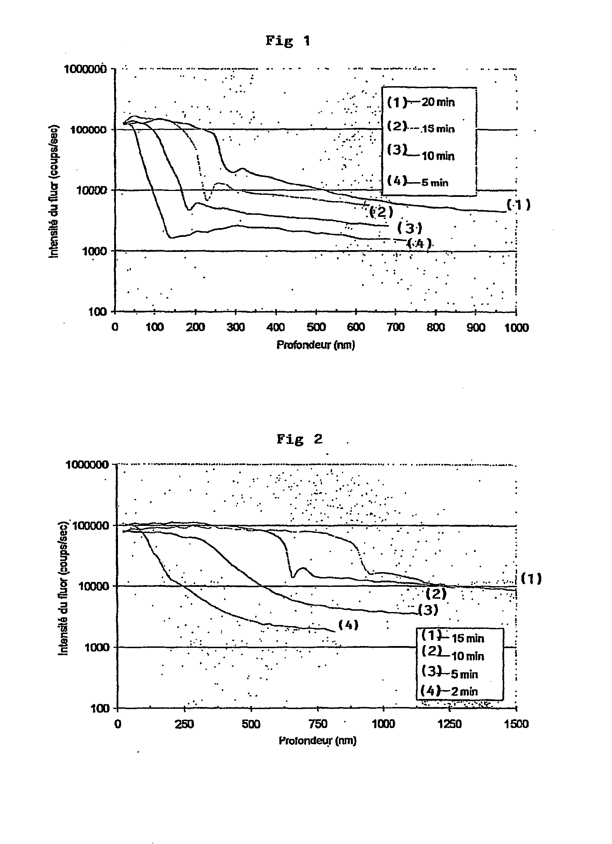

On a ensuite effectué une analyse SIMS du fluor des échantillons fluorés, les courbes obtenues faisant l'objet des Figures 1 et 2 (concentration en F₂ de respectivement 5% et 25%).

### Exemple 2 : Essai de vieillissement artificiel des hublots ("Star craze test" : S7.8ASTM Meeting 1995, Oklahoma)

Dans cet essai, on a évalué les dalles externes ayant les caractéristiques suivantes :
- Dalle externe A300 de PMMA étiré, produit de la Société SAINT GOBAIN SULLY ;
- Dalle externe A300 de PMMA fluoré selon le procédé décrit à l'Exemple 1 avec un mélange N₂/F₂ à 10% de F₂, pour une durée de traitement de 60 minutes en conditions standards.

L'essai "Star craze test" comprend quatre.phases :
(1) Immersion de la dalle dans un bain d'eau déminéralisée à 71 °C pendant 5 heures, puis relaxation de la dalle à température ambiante pendant 30. minutes ;
(2) Après avoir apposé un cache (protection adhésive) sur environ 1/4 de la surface de la dalle, pulvérisation à température ambiante d'une solution de H₂SO₄ à 7% en poids sur toute la surface de la dalle (obtention de gouttelettes de diamètre 3 à 5 mm réparties sur toute la surface) ;
(3) Mise sous contrainte continue en dépression (650 à 680 mbar) dans l'outillage adapté au format du hublot pendant 12 heures à température ambiante (étanchéité assurée par le joint gris du hublot).

Après l'essai sur la dalle de PMMA étiré, on a observé la présence de petites zones sphériques de 2 à 5 mm de diamètre où sont concentrées des stries orientées dans toutes les directions. En dehors de ces zones, on observe la présence de nombreuses stries orientées elles aussi dans toutes les directions.

Sur la dalle de PMMA fluoré, aucun microfendillement n'est observé au bout de 16 heures. On a alors poursuivi la mise en dépression. Au bout de 64 heures, aucun microfendillement n'a été observé.

## Revendications

1. Utilisation, pour l'amélioration de la résistance au microfendillement de la surface d'une plaque ou vitrage soumise à des cycles d'absorption/désorption d'eau sur ladite surface, d'un matériau transparent en plaque monolithique ou feuilletée à base d'un homo- ou d'un copolymère de méthacrylate de méthyle, le matériau feuilleté ayant au moins l'une de ses deux couches externes faites de l'homo- ou du copolymère de méthacrylate de méthyle, ladite plaque monolithique d'homo- ou copolymère de méthacrylate de méthyle ou au moins une couche externe d'homo- ou copotymèire de méthacrylate de méthyle de ta plaque feuilletée présentant dans ta région de la surface, sur une profondeur d'au moins 50 nanomètres à partir de la surface, un accroissement de sa masse volumique moyenne de 0,1 à 1 g/cm³, la masse volumique moyenne étant déterminée par réflectométrie des rayons X.

2. Utilisation d'un matériau selon la revendication 1, **caractérisé par le fait que** l'accroissement de la masse volumique moyenne est de 0,1 à 0,4 g/cm³.

3. Utilisation d'un matériau selon l'une des revendications 1 et 2, **caractérisé par le fait qu'**il a été soumis à un traitement apte à le densifier en surface sur une profondeur allant jusqu'à 5 microns.

4. Utilisation d'un matériau selon la revendication 3, **caractérisé par le fait qu'**il a été soumis à un traitement apte à le densifier en surface sur une profondeur allant de 0,5 à 1,5 micron.

5. Utilisation d'un matériau selon l'une des revendications 3 et 4, **caractérisé par le fait que** le traitement de densification de la surface est un traitement par le fluor qui a conduit à la formation d'un gradient de concentration en atomes de fluor de la surface vers l'intérieur du matériau.

6. Utilisation d'un matériau selon la revendication 5, **caractérisé par le fait que** la concentration en atomes de fluor, déterminée par SEM-EDS, est d'au moins 0,25 atome de fluor par motif répétitif : 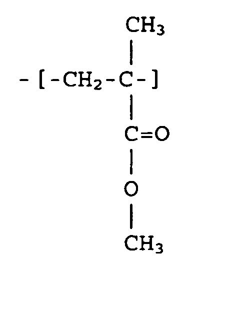 à l'extrême surface du matériau.

7. Utilisation d'un matériau selon la revendication 6, **caractérisé par le fait que** la concentration en atomes de fluor, déterminée par SEM-EDS, est de 0,25 à 8 atomes de fluor, notamment de 0,25 à 5 atomes de fluor, en particulier de 0,33 à 1,5 atome de fluor par motif répétitif : 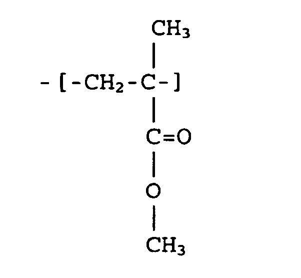 à l'extrême surface du matériau.

8. Utilisation d'un matériau tel que défini à l'une des revendications 1 à 7 dans des vitrages aptes à résister au microfendillement par densification de la surface destinée à être exposée à l'atmosphère extérieure, notamment de vitrages de véhicules aériens, en particulier de dalles externes de hublots.

9. Utilisation d'un matériau tel que défini à l'une des revendications 1 à 7 dans un procédé de restauration d'un vitrage pour véhicule aérien présentant à sa surface des microfendillements, **caractérisé par le fait que** l'on enlève la couche externe de la plaque constituant le vitrage à restaurer par traitement mécanique de polissage sur une profondeur de 0,3 à 0,7 mm, puis on soumet ladite plaque à un traitement de fluoration ou d'oxyfluoration.

10. Procédé permettant de rendre résistant au microfendillement et/ou d'améliorer la résistance au collage d'un matériau en plaque monolithique à base d'un polymère de méthacrylate de méthyle, **caractérisé par le fait que** l'on choisit le polymère de méthacrylate de méthyle parmi les copolymères de méthacrylate de méthyle-comonomère(s) fluoré(s), les polymères de méthacrylate de méthyle traités par immersion dans une solution d'acide fluorhydrique anhydre ou d'un sel choisi parmi NaF, KF, LiF et CaF₂, suivie d'une réaction de fluoration électrolytique et les polymères de méthacrylate de méthyle traités en surface par le procédé de fluoration ou d'oxyfluoration.

## Claims

1. Use, for the improvement of the crazing-resistance of the surface of a sheet or glazing subjected to water absorption/desorption cycles on said surface, of a transparent, monolithic or laminated sheet material based on a methyl methacrylate homopolymer or copolymer, the laminated material having at least one of its two outer layers made of the methyl methacrylate homopolymer or copolymer, said monolithic sheet of methyl methacrylate homopolymer or copolymer or at least one outer layer of methyl methacrylate homopolymer or copolymer of the laminated sheet having, in the region of the surface, over a depth of at least 50 nanometres from the surface, an increase in its average density of 0.1 to 1 g/cm³, the average density being determined by X-ray reflectometry.

2. Use of a material according to Claim 1, **characterized in that** the increase in the average density is 0.1 to 0.4 g/cm³.

3. Use of a material according to either of Claims 1 and 2, **characterized in that** it was subjected to a treatment capable of densifying it on the surface to a depth of up to 5 microns.

4. Use of a material according to Claim 3, **characterized in that** it was subjected to a treatment capable of densifying it on the surface to a depth ranging from 0.5 to 1.5 microns.

5. Use of a material according to either of Claims 3 and 4, **characterized in that** the surface densification treatment is a treatment with fluorine which results in the formation of a concentration gradient of fluorine atoms from the surface toward the inside of the'material.

6. Use of a material according to Claim 5, **characterized in that** the concentration of fluorine atoms, determined by SEM-EDS, is at least 0.25 fluorine atoms per repeat unit: 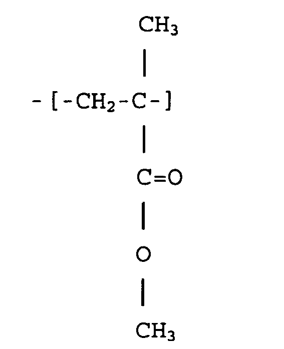 in the outermost surface layer of the material.

7. Use of a material according to Claim 6, **characterized in that** the concentration of fluorine atoms, determined by SEM-EDS, is 0.25 to 8 fluorine atoms, especially 0.25 to 5 fluorine atoms and in particular 0.33 to 1.5 fluorine atoms per repeat unit: 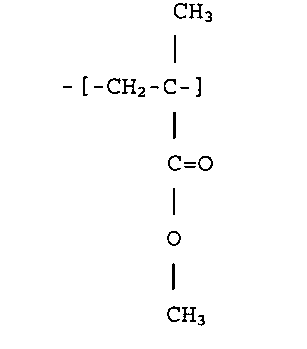 in the outermost surface layer of the material.

8. Use of a material as defined in one of Claims 1 to 7 in glazing made crazing-resistant by densification of that surface intended to be exposed to the external atmosphere, especially aircraft glazing, in particular outer window panels.

9. Use of a material as defined in one of Claims 1 to 7 a process for restoring aircraft glazing having crazing on its surface, **characterized in that** the outer layer of the sheet constituting the glazing to be restored, by a mechanical polishing treatment to a depth of 0.3 - 0.7 mm, is removed and then said sheet undergoes a fluorination or oxyfluorination treatment.

10. Process allowing a monolithic sheet material based on a methyl methacrylate polymer to be made crazing-resistant and/or its bonding strength to be improved, **characterized in that** the methyl methacrylate polymer is selected from among methyl methacrylate/fluorinated comonomer(s) copolymers, methyl methacrylate polymers treated by immersion in a solution of anhydrous hydrofluoric acid or of a salt chosen from NaF, KF, LiF and CaF₂, followed by an electrolytic fluorination reaction, and methyl methacrylate polymers surface-treated by the fluorination or oxyfluorination process.

## Patentansprüche

1. Verwendung eines transparenten Materials aus einer monolithischen oder Verbundglasscheibe auf der Basis eines Methylmethacrylat-Homopolymers oder -Copolymers zur Verbesserung der Widerstandsfähigkeit gegenüber Mikrorissbildung in der Oberfläche einer Platte oder Glasscheibe, die Wasserabsorptions-/Desorptionszyklen auf dieser Oberfläche unterworfen ist, wobei das Verbundmaterial in mindestens einer seiner beiden Außenschichten aus dem Methylmethacrylat-Homopolymer oder -Copolymer hergestellt ist und die monolithische Methylmethacrylat-Homopolymer- oder -Copolymer-Scheibe oder mindestens eine Außenschicht aus dem Methylmethacrylat-Homopolymer oder -Copolymer der Verbundglasscheibe in dem Bereich der Oberfläche über eine Tiefe von mindestens 50 Nanometern ab der Oberfläche eine Zunahme der mittleren Dichte um 0,1 bis 1 g/cm³ aufweist, die durch Röntgenreflexionsmessung gemessen wird.

2. Verwendung eines Materials nach Anspruch 1, **dadurch gekennzeichnet, dass** die Zunahme der mittleren Dichte 0,1 bis 0,4 g/cm³ beträgt.

3. Verwendung eines Materials nach Anspruch 1 oder 2, **dadurch gekennzeichnet, dass** es einer Behandlung unterworfen worden ist, die in der Lage ist, seine Oberfläche über eine Tiefe von bis zu 5 Mikrometern zu verdichten.

4. Verwendung eines Materials nach Anspruch 3, **dadurch gekennzeichnet, dass** es einer Behandlung unterworfen worden ist, die in der Lage ist, seine Oberfläche über eine Tiefe von 0,5 bis 1,5 Mikrometern zu verdichten.

5. Verwendung eines Materials nach Anspruch 3 oder 4, **dadurch gekennzeichnet, dass** die verdichtende Behandlung der Oberfläche eine Behandlung mit Fluor ist, die zur Bildung eines Konzentrationsgradienten der Fluoratome ab der Oberfläche zum Inneren des Materials geführt hat.

6. Verwendung eines Materials nach Anspruch 5, **dadurch gekennzeichnet, dass** die durch SEM-EDS bestimmte Konzentration der Fluoratome mindestens 0,25 Fluoratom pro Repetiereinheit: 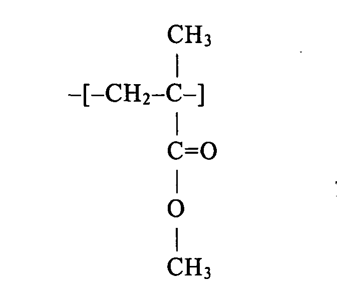 in der äußersten Oberfläche des Materials beträgt.

7. Verwendung eines Materials nach Anspruch 6, **dadurch gekennzeichnet, dass** die durch SEM-EDS bestimmte Konzentration der Fluoratome 0,25 bis 8 Fluoratome, insbesondere 0,25 bis 5 Fluoratome, und speziell 0,33 bis 1,5 Fluoratome pro Repetiereinheit: 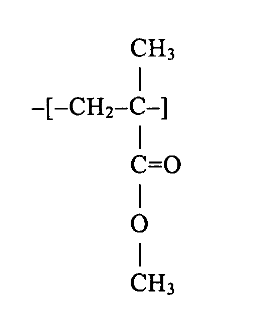 in der äußersten Oberfläche des Materials beträgt.

8. Verwendung eines in einem der Ansprüche 1 bis 7 definierten Materials in Verglasungen, die in der Lage sind, einer Mikrorissbildung durch Verdichtung der Oberfläche zu widerstehen, die vorgesehen ist, der Außenatmosphäre ausgesetzt zu werden, insbesondere in Verglasungen von Luftfahrzeugen, speziell Außenscheiben von Kabinenfenstern.

9. Verwendung eines in einem der Ansprüche 1 bis 7 definierten Materials in einem Verfahren zur Reparatur einer Verglasung eines Luftfahrzeugs, die in ihrer Oberfläche Mikrorisse aufweist, **dadurch gekennzeichnet, dass** die Außenschicht der die zu reparierende Verglasung bildenden Scheibe durch mechanisches Polieren über eine Tiefe von 0,3 bis 0,7 mm abgetragen und anschließend diese Scheibe einer Fluorierungs- oder Oxyfluorierungsbehandlung unterworfen wird.

10. Verfahren, das es erlaubt, ein Material, das aus einer monolithischen Scheibe auf der Basis eines Polymethylmethacrylats besteht, gegenüber Mikrorissbildung widerstandsfähig zu machen und/oder seine Beständigkeit gegenüber Verkleben zu verbessern, **dadurch gekennzeichnet, dass** das Polymethylmethacrylat aus den Copolymeren aus Methylmethacrylatfluoriertem/fluorierten Comonomer/en ausgewählt wird, die Polymethylmethacrylate durch Eintauchen in eine Lösung aus wasserfreier Flusssäure oder eines Salzes, das aus NaF, KF, LiF und CaF₂ ausgewählt ist, behandelt werden, anschließend eine elektrolytische Fluorierungsreaktion durchgeführt wird und die Polymethylmethacrylate auf der Oberfläche durch das Fluorierungs- oder Oxyfluorierungsverfahren behandelt werden.
